# EUROPÄISCHE PATENTSCHRIFT

(11) **EP 3 167 259 B1**
(45) Veröffentlichungstag und Bekanntmachung des Hinweises auf die Patenterteilung: **17.06.2020**
(21) Anmeldenummer: 14739740.0
(22) Anmeldetag: 07.07.2014
(51) Int. Cl.: G01F 25/00, G01F 23/284

(54) **RADARFÜLLSTANDMESSGERÄT MIT EINER SICHERHEITSEINRICHTUNG**
RADAR LEVEL GAUGE COMPRISING A SAFETY DEVICE
APPAREIL DE MESURE DE NIVEAU PAR RADAR POURVU D'UN DISPOSITIF DE SÉCURITÉ

(43) Veröffentlichungstag der Anmeldung: 17.05.2017
(73) Patentinhaber: VEGA Grieshaber KG, 77709 Wolfach (DE)
(72) Erfinder: HENGSTLER, Clemens, 77716 Haslach (DE)
(74) Vertreter: Patentanwälte Bauer Vorberg Kayser
(86) Internationale Anmeldenummer: PCT/EP2014/064492
(87) Internationale Veröffentlichungsnummer: WO 2016/004977

(56) Entgegenhaltungen:
- EP-A2- 0 668 488
- DE-A1-102010 040 314
- GB-A- 2 285 131
- US-B2- 8 009 085

## Beschreibung

Die vorliegende Erfindung betrifft ein Radarfüllstandmessgerät mit einer Sicherheitseinrichtung gemäß dem Oberbegriff des Patentanspruchs 1 oder dem Oberbegriff des Patentanspruchs 2.

Radarfüllstandmessgeräte mit einer solchen Sicherheitseinrichtung sind aus dem Stand der Technik, beispielsweise aus der US 8,009,085 B2 oder der GB 2 285 131 A bekannt und weisen einen Signalgenerator zur Erzeugung elektromagnetischer Wellen und eine Antenne zum Abstrahlen der elektromagnetischen Wellen in einen Behälter sowie zum Empfangen reflektierter elektromagnetischer Wellen aus dem Behälter auf, wobei die Sicherheitseinrichtung geeignet ausgebildet ist, eine Funktionsfähigkeit des Radarfüllstandmessgerätes zu überprüfen. Die im Stand der Technik gezeigten Sicherheitseinrichtungen weisen dazu einen Reflektor und eine Verstelleinrichtung auf, die geeignet ausgebildet ist, den Reflektor wenigstens zwischen einer ersten Position, in der er die elektromagnetischen Wellen reflektiert, und einer zweiten Position, in der er die elektromagnetischen Wellen reduziert reflektiert, zu verstellen.

Die aus dem Stand der Technik bekannten Radarfüllstandmessgeräte kommen in der Regel in Behältern, die in der Regel als Tanks oder Silos, die zur Aufbewahrung von verschiedenen Materialien ausgebildet sind, zum Einsatz. In solchen Tanks oder Silos werden beispielsweise Lebensmittel, Getränke, Arzneimittel oder Treibstoffe aufbewahrt, sodass eine berührungslose Füllstandmessung notwendig ist. Als berührungslose Füllstandmesstechniken sind im Stand der Technik beispielsweise die erwähnten Radarfüllstandmessgerät oder alternativ ultraschallbasierte Füllstandmessgeräte bekannt. Aufgrund ihrer hohen Messgenauigkeit sowie der geringen Störanfälligkeit sind Radarfüllstandmessgeräte weit verbreitet.

Die aus dem Stand der Technik bekannten Radarfüllstandmessgeräte werden in der Regel über einen Flansch im oberen Bereich eines Tanks oder Silos montiert, wobei eine Elektronik außerhalb und eine Antenne des Radarfüllstandmessgerätes innerhalb des Gehäuses angeordnet ist. Die Antenne ist geeignet ausgerichtet, elektromagnetische Wellen, das heißt insbesondere ein Radarsignal, in Richtung eines Füllgutes, das innerhalb des Behälters aufbewahrt wird, zu senden und von dem Material reflektierte elektromagnetische Wellen zu empfangen. Aufgrund einer Zeitdifferenz zwischen einem Aussenden des elektromagnetischen Signals und dem Empfangen des reflektierten elektromagnetischen Signals kann dann ein Füllstand innerhalb des Behälters bestimmt werden. Mögliche Messsysteme sind das Pulsradar-System, bei dem Radarimpulse in Richtung Messgut gesendet, dort reflektiert und durch Laufzeitmessung eine Füllstandsermittlung erfolgt, und das frequenzmodulierte Dauerstrichverfahren bei dem ein frequenzmoduliertes Hochfrequenzsignal mit steigender Frequenz ausgesendet und aus einer Frequenzdifferenz zwischen ausgesendetem und empfangenem Signal der Füllstand bestimmt wird.

Zur Funktionsüberprüfung des Radarfüllstandmessgerätes, insbesondere zur Überprüfung der Funktionsfähigkeit bei einem sicherheitsrelevanten Maximalfüllstand, einem Füllstand, bei dem ein automatisches Schutzsystem eine weitere Befüllung verhindert und gegebenenfalls weiteren relevanten Füllständen ist es notwendig, eine Sicherheitseinrichtung vorzusehen, die eine Aussage über die Funktionsfähigkeit bei diesem Maximalfüllstand erlaubt. Aus dem Stand der Technik ist es hierfür bekannt, bei einem Sicherheitstest einen Reflektor manuell in den Strahlengang des Radarfüllstandmessgerätes zu verbringen, um so auch bei einer geringeren Füllung des Behälters die Funktion des Messgerätes bei dem gewünschten Füllstand zu überprüfen, indem der Reflektor bei diesem Füllstand in den Strahlengang des Radarfüllstandmessgerätes eingebracht und auf diese Weise eine Reflexion bei der gewünschten Füllhöhe erzeugt wird.

Bei sicherheitsrelevanten Messanwendungen ist es üblich, zur Erzeugung einer Redundanz zusätzlich weitere Sensoren zur Erfassung eines Füll- oder Grenzstandes vorzusehen. Ferner ist es üblich entsprechende Tanks zusätzlich auf deren Temperatur und/oder Druck hin zu überwachen. Bei dem aus dem Stand der Technik bekannten Anordnungen wird es dabei als ein Nachteil empfunden, dass zusätzlich zu dem bereits vorgesehenen Radarfüllstandmessgerät mit integrierter Sicherheitseinrichtung zusätzlich Montagemöglichkeiten für weitere Sensoren und Tanks vorgesehen sein müssen. Dies wird insbesondere als Nachteil erachtet, da hier die zusätzliche Montageöffnung beispielsweise für einen Flansch die Störanfälligkeit des Gesamtsystems, beispielsweise hinsichtlich der Dichtigkeit erhöht.

Aus DE 10 2010 040 314 A1 sind Füllstandmessgeräte mit einem ersten Radarsensor, der einen Abstand zwischen einer Oberseite eines Behälters und einer Oberfläche eines Mediums ermittelt, und einem zweiten Radarsensor, der einen Abstand zwischen der Oberseite und einer reflektierenden Referenzmarke ermittelt, bekannt. Der exakte Füllstand wird durch Vergleich der ermittelten Abstände durch eine Auswerteeinheit bestimmt. Aus EP 0 668 488 A1 sind Füllstandmessgeräte mit einem Radarsensor und einer Reihe von Grenzwertgebern bekannt. Die Grenzwertgeber sind an verschiedenen Höhen des Behälters angebracht und zeigen an, ob der Füllstand im Behälter eine vorbestimmte Höhe erreicht hat oder nicht.

Es ist die Aufgabe der vorliegenden Erfindung ein aus dem Stand der Technik bekanntes Radarfüllstandmessgerät mit einer Sicherheitseinrichtung derart weiterzubilden, dass die aus dem Stand der Technik bekannten Nachteile vermieden werden.

Diese Aufgabe wird durch ein Radarafüllstandmessgerät mit den Merkmalen des Patentanspruchs 1 gelöst.

Ein erfindungsgemäßes Radarafüllstandmessgerät mit einem Signalgenerator zur Erzeugung elektromagnetischer Wellen und einer Antenne zum Abstrahlen der elektromagnetischen Wellen in einen Behälter sowie zum Empfangen reflektierter elektromagnetischer Wellen aus dem Behälter mit einer Sicherheitseinrichtung zum Überprüfen der Funktionsfähigkeit oder zum Verbessern der Messqualität des Radarafüllstandmessgeräts, bei dem die Sicherheitseinrichtung einen Reflektor umfasst und die Sicherheitseinrichtung wenigstens einen zusätzlichen Sensor zur Erfassung einer Messgröße in dem Behälter aufweist, zeichnet sich dadurch aus, dass die Sicherheitseinrichtung eine Verstelleinrichtung und optional eine Reduktionseinrichtung umfasst und geeignet ausgebildet ist, den Reflektor und/oder die optionale Reduktionseinrichtung wenigstens zwischen einer ersten Position, in der der Reflektor die elektromagnetischen Wellen reflektiert und einer zweiten Position, in der der Reflektor die elektromagnetischen Wellen reduziert reflektiert, ausgebildet ist. Als Reduktionseinrichtung kann beispielsweise ein absorbierendes Material oder ein Diffusor zum Einsatz kommen, durch das der Reflektor aus Sicht der Antenne verdeckt oder abgeschattet wird und dadurch die ausgesendeten elektromagnetischen Wellen nur reduziert reflektiert.

Durch die erfindungsgemäße Anordnung wird in das Radarafüllstandmessgerät mit einer Sicherheitseinrichtung ein weiterer Sensor integriert, so dass zusätzliche Befestigungsanordnungen, beispielsweise Flansche und dafür nötige Öffnungen in dem Behälter vermieden werden können.

In einer besonders günstigen Ausgestaltung ist der wenigstens ein zusätzlicher Sensor an der Sicherheitseinrichtung angeordnet und/oder in diese integriert. Es wird auf diese Weise ermöglicht, dass der zusätzliche Sensor von dem Signalgenerator und der Antenne beabstandet und in einer Messhöhe angeordnet werden kann, die beispielsweise einem sicherheitsrelevanten Maximalfüllstand, einem Füllstand, bei dem ein automatisches Schutzsystem eine weitere Befüllung verhindert oder anderen relevanten Füllständen angeordnet werden kann. Ferner wird durch eine Anordnung an der Sicherheitseinrichtung oder eine Integration in die Sicherheitseinrichtung erreicht, dass im Vergleich zu vorhandenen Radarafüllstandmessgerät mit Sicherheitseinrichtung kein zusätzlicher Platzbedarf auftritt und somit die bislang verwendeten Befestigungseinrichtungen, beispielsweise Flansche weiter verwendet werden können.

Der zusätzliche Sensor kann dabei beispielsweise als Füllstand- und/oder Grenzstandsensor ausgebildet sein. Durch das Vorsehen eines zusätzlichen Füllstandsensors oder eines Grenzstandsensors wird eine Redundanz für die Messwerte des Radarfüllstandmessgerätes erzeugt, so dass zumindest in einem sicherheitskritischen Bereich wenigstens ein zweiter Messwert für eine Plausibilitätskontrolle zur Verfügung steht.

Der zusätzliche Sensor kann dafür beispielsweise als kapazitiv arbeitender Füllstand- und/oder Grenzstandsensor ausgebildet sein. In einer besonders günstigen Ausgestaltungsform weist die Sicherheitseinrichtung dafür ein Führungsrohr auf, in dem die Verstelleinrichtung aufgenommen und geführt ist, wobei das Führungsrohr als Elektrode des kapazitiven Sensors ausgebildet ist. In dieser Ausgestaltungsform ist zwischen dem Führungsrohr und der Verstelleinrichtung ein Isolator angeordnet, der die Verstelleinrichtung von dem Führungsrohr elektrisch isoliert.

Zusätzlich oder alternativ kann ein zusätzlicher Sensor als Vibrationssensor ausgebildet sein.

Als weitere oder alternative zusätzliche Sensoren sind ein Temperatursensor im Rohr welches eingeschwenkt wird, ein Schwimmer, eine hochfrequent arbeitende Kapazitätsmessung oder ein Ultraschallsensor im Rohr denkbar.

In einer Ausgestaltung, bei der der zusätzliche Sensor als Vibrationssensor ausgestaltet ist kann durch den zusätzlichen Sensor beispielsweise ein Grenzstand an einem unteren Ende der Sicherheitseinrichtung erfasst werden, so dass zusätzlich in der Füllhöhe, die auch für Sicherheitstests mit dem Reflektor relevant ist eine Grenzstanderfassung zur Absicherung der Messwerte des Radarfüllstandmessgerätes stattfindet.

Der zusätzliche Sensor kann beispielsweise abgewinkelt an der Sicherheitseinrichtung angeordnet sein, so dass durch den zusätzlichen Sensor keine zusätzliche Baulänge, die eine Anordnung des zusätzlichen Sensors bei einem niedrigeren Füllstand mit sich bringen würde, notwendig ist.

Der zusätzliche Sensor kann dabei insbesondere mit der Verstelleinrichtung gekoppelt und bevorzugt an der Verstelleinrichtung angeordnet sein. Der zusätzliche Sensor kann dabei insbesondere in den Reflektor integriert sein oder ein Sensorgehäuse aufweisen, dass als Reflektor ausgebildet ist.

Wird beispielsweise ein Vibrationssensor als zusätzlicher Sensor eingesetzt, so kann dieser mit einem als Reflektor wirkenden Sensorgehäuse ausgebildet sein und beispielsweise in einem Winkel zwischen 45° und 90° relativ zu einer Längsachse der Sicherheitseinrichtung bzw. zu einer Hauptabstrahleinrichtung der Antenne angeordnet sein. Der zusätzliche Sensor ist damit durch die Verstelleinrichtung in den Strahlengang des Radarfüllstandmessgerätes schwenkbar, so dass er für eine Sicherheitsüberprüfung die von der Antenne ausgesendeten magnetischen Wellen reflektiert und kann gleichzeitig im Normalbetrieb, d. h. wenn der zusätzliche Sensor aus dem Strahlengang des Radarfüllstandmessgerätes geschwenkt ist, eine Grenzstanderfassung ermöglichen.

Zusätzlich oder alternativ kann die Anordnung einen Temperatursensor und/oder einen Drucksensor aufweisen. Da sowohl die Temperatur als auch der Druck, beispielsweise bei gasförmigen (Gilt auch für flüssige) Medien von hoher Sicherheitsrelevanz sind, kann so eine zusätzliche Messsicherheit hergestellt werden. Das gleiche gilt auch für flüssige Medien. Die vorliegende Erfindung kann unter anderem bei TDR (time domain reflectonetry) Systemen mit geführten Radarwellen, dem Pulsradar-System sowie dem FMCW (frequency modulated continous wave) System eingesetzt werden.

Die vorliegende Erfindung wird nachfolgend unter Bezugnahme auf die beigefügten Figuren eingehend erläutert. Es zeigen:
- Figur 1: eine Prinzipskizze eines ersten Ausführungsbeispiels eines Radarfüllstandmessgeräts mit zusätzlichem Sensor und aktivierter Sicherheitseinrichtung,
- Figur 2: das Radarfüllstandmessgerät aus Figur 1 mit inaktiver Sicherheitseinrichtung,
- Figur 3: ein zweites Ausführungsbeispiel eines Radarfüllstandmessgeräts mit einem als Reflektor ausgebildeten zusätzlichen Sensor,
- Figur 4: ein drittes Ausführungsbeispiel eines Radarfüllstandmessgeräts mit einem kapazitiven Füllstandssensor.

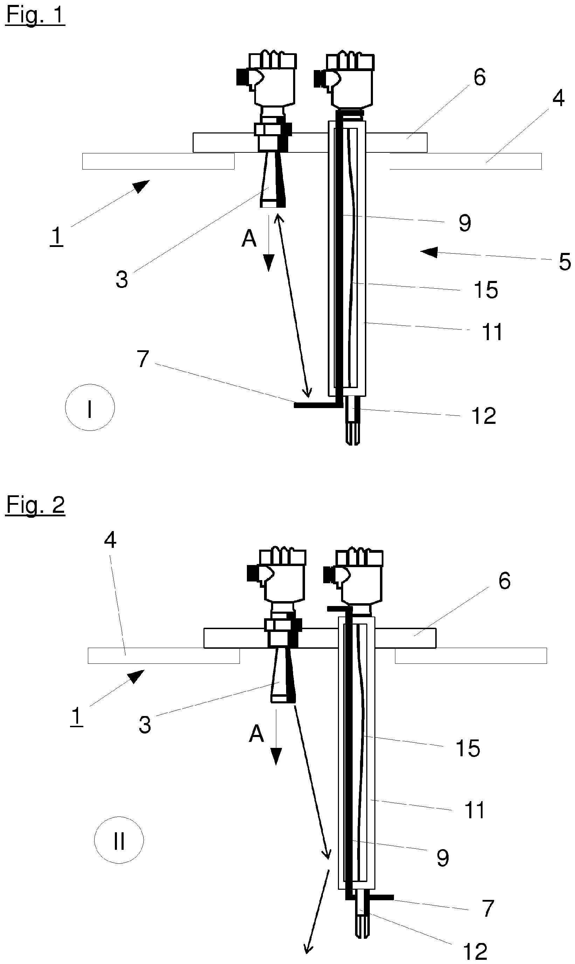

Figur 1 zeigt ein erstes Ausführungsbeispiel eines Radarfüllstandmessgerätes 1 mit einer Sicherheitseinrichtung 5 zur Funktionsüberprüfung des Radarfüllstandmessgerätes 1 bei einem sicherheitsrelevanten Maximalfüllstand.

Das Radarfüllstandmessgerät 1 weist einen Signalgenerator und eine Antenne 3 auf, die vorliegend als Hornantenne mit einer Hauptabstrahlrichtung A ausgebildet ist. Für eine Funktionsüberprüfung des Radarfüllstandmessgerätes 1 ist eine Sicherheitseinrichtung 5 mit einem über eine Verstelleinrichtung 9 schwenkbar angeordneten Reflektor 7 vorgesehen. In der in Figur 1 dargestellten ersten Position I ist der Reflektor 7 in einen Strahlengang des Radarfüllstandmessgerätes 1 geschwenkt und reflektiert damit von der Antenne 3 ausgesendete elektromagnetische Wellen zu dieser zurück, so dass ein Echo bei einer zur Einbauhöhe des Reflektors 7 korrespondierenden Füllhöhe entsteht. Es kann auf diese Weise überprüft werden, ob das Radarfüllstandmessgerät 1 Füllstände in der Höhe des Reflektors 7 zuverlässig erfasst.

Die Sicherheitseinrichtung 5 ist in dem vorliegenden Ausführungsbeispiel mit einem rohrförmigen Gehäuse 11 ausgebildet, durch das die Verstelleinrichtung 9 von außerhalb des Behälters 4 auf den Reflektor 7 wirkt. Im vorliegenden Ausführungsbeispiel ist eine mechanische Kopplung des Reflektors 7 mit der Verstelleinrichtung 9 gezeigt, wobei auch andere Kopplungen, beispielsweise über einen elektrischen Antrieb, eine pneumatische Kopplung oder eine magnetische Kopplung denkbar wären.

An dem Gehäuse 11 ist innenseitig in einer Ausrichtung parallel zur Hauptabstrahlrichtung A der Antenne 3 ein zusätzlicher Sensor 12, der vorliegend als Vibrationsgrenzschalter ausgebildet ist, angeordnet. Der zusätzliche Sensor 12 ist über eine Anschlussleitung 15 mit einer Sensorelektronik, die vorliegend in einem außerhalb des Behälters 4 angeordneten Elektronikgehäuse untergebracht ist, verbunden, so dass eine Auswertung des Sensorsignals erfolgen kann.

Sowohl das Radarfüllstandmessgerät 1 als auch die Sicherheitseinrichtung 5 mit dem daran angeordneten zusätzlichen Sensor 12 sind über einen gemeinsamen Befestigungsflansch 6 an dem Behälter 4, dessen Füllstand überwacht wird, angeordnet. Durch eine Flanschverbindung kann eine zuverlässige Abdichtung des Behälters 4 gegenüber der Umgebung erfolgen, so dass insbesondere bei Anwendungen mit druckbeaufschlagten und/oder toxischen Medien eine hohe Sicherheit gewährleistet ist.

In der Figur 2 ist die Anordnung aus Figur 1 in einer zweiten Position II gezeigt, in der der Reflektor 7 der Sicherheitseinrichtung 5 aus dem Strahlengang des Radarfüllstandmessgerätes 1 geschwenkt ist, so dass durch den Reflektor 7 keine Reflexion der von der Antenne 3 ausgesendeten elektromagnetischen Wellen erfolgt. In dieser zweiten Position II, in der die Sicherheitseinrichtung 5 inaktiviert ist, kann der sicherheitsrelevante Füllstand, in dem der Reflektor 7 angeordnet ist weiterhin von dem zusätzlichen Sensor 12, vorliegend dem Vibrationsgrenzschalter, überwacht werden. Es kann auf diese Weise sichergestellt werden, dass auch bei einem Ausfall des Radarfüllstandmessgeräts 1 ein zuverlässiges Messsignal in dieser sicherheitskritischen Füllhöhe erzeugt und ggf. eine weitere Befüllung des Behälters 4 verhindert wird.

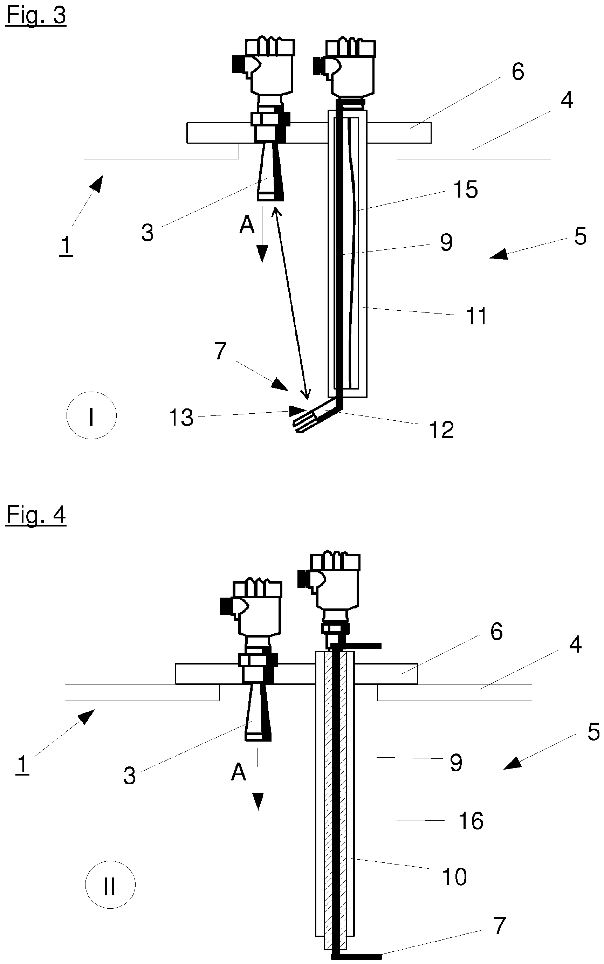

In Figur 3 ist ein zweites Ausführungsbeispiel eines Radarfüllstandmessgerätes 1 mit einem zusätzlichen Sensor 12 gezeigt, wobei vorliegend der zusätzliche Sensor 12, der ebenfalls als Vibrationsgrenzschalter ausgebildet ist, mit einem geeignet ausgebildeten Sensorgehäuse 13 gleichzeitig als Reflektor 7 der Sicherheitseinrichtung 5 ausgebildet ist.

In dem vorliegenden Ausführungsbeispiel ist der zusätzliche Sensor 12 über die Verstelleinrichtung 9 schwenkbar an dem Gehäuse 11 der Sicherheitseinrichtung 5 gelagert, so dass der zusätzliche Sensor 12 entweder in den Strahlengang des Radarfüllstandmessgerätes 1 geschwenkt oder aus diesem entfernt werden kann. Idealerweise ist der zusätzliche Sensor 12 dabei derart angeordnet, dass eine in Richtung der Antenne 3 orientierte Oberfläche des Sensorgehäuses 13 relativ zur Hauptabstrahlrichtung A der Antenne 3 einen Winkel zwischen 45° und 90° aufweist. Auf diese Weise kann, wenn der zusätzliche Sensor 12 wie in Figur 3 dargestellt, in der ersten Position I, ist in der die von der Antenne 3 ausgesendeten elektromagnetischen Wellen reflektiert werden, ein zuverlässiges Echosignal auf der von der Sicherheitseinrichtung 5 überwachten Füllhöhe erzeugen.

In Figur 4 ist ein drittes Ausführungsbeispiel eines Radarfüllstandmessgerätes 1 mit einer Sicherheitseinrichtung 5 gezeigt, wobei die Sicherheitseinrichtung 5 vorliegend mit einem Führungsrohr 10 ausgestaltet ist, in dem die Verstelleinrichtung 9 über einen Isolator 16 isoliert geführt ist. Das Führungsrohr 10 des vorliegenden Ausführungsbeispiels ist dabei als Elektrode einer kapazitiven Füllstandmesssonde ausgebildet, wodurch in einem Bereich, in dem sich die Sicherheitseinrichtung 5 erstreckt eine kontinuierliche Füllstandmessung ermöglicht wird.

Alternativ besteht auch die Möglichkeit den Reflektor (7) als kapazitiven Grenzstandsensor auszugestalten. Hierbei wirkt das Führungsrohr ggf. mit dem Behälter als Gegenelektrode. Sämtlichen vorgenannten Ausführungsbeispielen ist gemeinsam, dass durch die dargestellte Anordnung platzsparend eine Redundanz der Überwachung einer kritischen Füllhöhe des Behälters 4 geschaffen und damit eine erhöhte Messsicherheit erreicht wird. Wobei dieser redundanten Messeinrichtung eine Möglichkeit zur Überwachung des ersten Messergebnisses zumindest zeitweise ermöglicht.

In den gezeigten Ausführungsbeispielen ist der zweite Sensor jeweils im gleichen Flansch wie der erste Sensor angeordnet. Dieser kann aber auch lediglich im gleichen Behälter angeordnet und mit einem zusätzlichen Flansch befestigt sein. Eine Anordnung in einem einzigen Flansch wird jedoch bevorzugt.

### Bezugszeichenliste

- 1: Radarfüllstandmessgerät
- 3: Antenne
- 4: Behälter
- 5: Sicherheitseinrichtung
- 6: Befestigungsflansch
- 7: Reflektor
- 9: Verstelleinrichtung

- 10: Führungsrohr
- 11: Gehäuse
- 12: Zusätzlicher Sensor
- 13: Sensorgehäuse
- 15: Anschlussleitung
- 16: Isolator

- A: Abstrahlrichtung
- I: erste Position
- II: zweite Position

## Patentansprüche

1. Radarfüllstandmessgerät (1) mit einem Signalgenerator zur Erzeugung elektromagnetischer Wellen und einer Antenne (3) zum Abstrahlen der elektromagnetischen Wellen sowie zum Empfangen reflektierter elektromagnetischer Wellen, mit einer Sicherheitseinrichtung (5) zum Überprüfen der Funktionsfähigkeit oder zum Verbessern der Messqualität des Radarfüllstandmessgeräts (1), wobei
die Sicherheitseinrichtung (5) einen Reflektor (7) umfasst, wobei die Sicherheitseinrichtung (15) wenigstens einen zusätzlichen Sensor (12) zur Erfassung einer Messgröße aufweist,
**dadurch gekennzeichnet, dass** die Sicherheitseinrichtung (5) eine Verstelleinrichtung (9) umfasst und geeignet ausgebildet ist, den Reflektor (7) wenigstens zwischen einer ersten Position (I), in der der Reflektor die elektromagnetischen Wellen reflektiert und einer zweiten Position (II), in der der Reflektor die elektromagnetischen Wellen reduziert reflektiert, zu verstellen.

2. Radarfüllstandmessgerät (1) mit einem Signalgenerator zur Erzeugung elektromagnetischer Wellen und einer Antenne (3) zum Abstrahlen der elektromagnetischen Wellen sowie zum Empfangen reflektierter elektromagnetischer Wellen, mit einer Sicherheitseinrichtung (5) zum Überprüfen der Funktionsfähigkeit oder zum Verbessern der Messqualität des Radarfüllstandmessgeräts (1), wobei
die Sicherheitseinrichtung (5) einen Reflektor (7) umfasst, wobei die Sicherheitseinrichtung (15) wenigstens einen zusätzlichen Sensor (12) zur Erfassung einer Messgröße aufweist,
**dadurch gekennzeichnet, dass** die Sicherheitseinrichtung (5) eine Verstelleinrichtung (9) und eine Reduktionseinrichtung umfasst und geeignet ausgebildet ist, den Reflektor (7) und/oder die Reduktionseinrichtung wenigstens zwischen einer ersten Position (I), in der der Reflektor die elektromagnetischen Wellen reflektiert und einer zweiten Position (II), in der der Reflektor die elektromagnetischen Wellen reduziert reflektiert, zu verstellen.

3. Radarfüllstandmessgerät (1) nach Anspruch 1 oder 2,
**dadurch gekennzeichnet, dass** der wenigstens eine zusätzliche Sensor (12) an der Sicherheitseinrichtung (5) angeordnet und/oder in diese integriert ist.

4. Radarfüllstandmessgerät (1) nach einem der Ansprüche 1 bis 3,
**dadurch gekennzeichnet, dass** der zusätzliche Sensor (12) als Füllstand- und/oder Grenzstandsensor ausgebildet ist.

5. Radarfüllstandmessgerät (1) nach Anspruch 4,
**dadurch gekennzeichnet, dass** der zusätzliche Sensor (12) als kapazitiv arbeitender Füllstand- und/oder Grenzstandsensor ausgebildet ist.

6. Radarfüllstandmessgerät (1) nach Anspruch 5,
**dadurch gekennzeichnet, dass** die Sicherheitseinrichtung (5) ein Führungsrohr (10) aufweist, das als Elektrode des kapazitiven Sensors ausgebildet ist.

7. Radarfüllstandmessgerät (1) nach Anspruch 5,
**dadurch gekennzeichnet, dass** der Reflektor (7) als kapazitiver Sensor ausgebildet ist.

8. Radarfüllstandmessgerät (1) nach einem der Ansprüche 1 bis 4,
**dadurch genkennzeichnet,** dass
der zusätzliche Sensor (12) als Vibrationssensor oder Schwimmer oder hochfrequent betriebener kapazitiver Sensor, oder Ultraschallsensor oder Temperatursensor ausgebildet ist.

9. Radarfüllstandmessgerät (1) nach einem der vorhergehenden Ansprüche,
**dadurch gekennzeichnet, dass**
der zusätzliche Sensor (12) abgewinkelt an der Sicherheitseinrichtung (5) angeordnet ist.

10. Radarfüllstandmessgerät (1) nach einem der vorhergehenden Ansprüche,
**dadurch gekennzeichnet, dass**
der zusätzliche Sensor (12) mit der Verstelleinrichtung (9) gekoppelt ist und bevorzugt an der Verstelleinrichtung (9) angeordnet ist.

11. Radarfüllstandmessgerät (1) nach Anspruch 10,
**dadurch gekennzeichnet, dass**
der zusätzliche Sensor (12) in den Reflektor (7) integriert ist oder ein Sensorgehäuse (11) aufweist, das als Reflektor (7) ausgebildet ist.

12. Radarfüllstandmessgerät (1) nach Anspruch 10,
**dadurch gekennzeichnet, dass**
der zusätzliche Sensor (12) schwenkbar ausgebildet ist.

## Claims

1. A radar level measuring device (1) with a signal generator for generating electromagnetic waves and an antenna (3) for emitting the electromagnetic waves as well as receiving reflected electromagnetic waves, with a safety device (5) for checking the functionality or for improving the measuring quality of the radar level measuring device (1), wherein
the safety device (5) comprises a reflector (7), wherein the safety device (15) has at least one additional sensor (12) for detecting a measuring quantity,
**characterized in that**
the safety device (5) comprises an adjusting device (9) and is suitably configured for adjusting the reflector (7) at least between a first position (I), in which the reflector reflects the electromagnetic waves, and a second position (II), in which the reflector reflects the electromagnetic waves in a reduced manner.

2. A radar level measuring device (1) with a signal generator for generating electromagnetic waves and an antenna (3) for emitting the electromagnetic waves as well as receiving reflected electromagnetic waves, with a safety device (5) for checking the functionality or for improving the measuring quality of the radar level measuring device (1), wherein
the safety device (5) comprises a reflector (7), wherein the safety device (15) has at least one additional sensor (12) for detecting a measuring quantity,
**characterized in that**
the safety device (5) comprises an adjusting device (9) and a reduction device, and is suitably configured for adjusting the reflector (7) and/or the reduction device at least between a first position (I), in which the reflector reflects the electromagnetic waves, and a second position (II), in which the reflector reflects the electromagnetic waves in a reduced manner.

3. The radar level measuring device (1) according to claim 1 or 2,
**characterized in that**
the at least one additional sensor (12) is disposed on the safety device (5) and/or is integrated therein.

4. The radar level measuring device (1) according to any one of the claims 1 to 3,
**characterized in that**
the additional sensor (12) is configured as a filling level and/or point level sensor.

5. The radar level measuring device (1) according to claim 4,
**characterized in that**
the additional sensor (12) is configured as a capacitively operating filling level and/or point level sensor.

6. The radar level measuring device (1) according to claim 5,
**characterized in that**
the safety device (5) has a guide tube (10) configured as an electrode of the capacitive sensor.

7. The radar level measuring device (1) according to claim 5,
**characterized in that** the reflector (7) is configured as a capacitive sensor.

8. The radar level measuring device (1) according to any one of the claims 1 to 4,
**characterized in that**
the additional sensor (12) is configured as a vibration sensor or a float or a high-frequency operation capacitive sensor or an ultrasonic sensor or a temperature sensor.

9. The radar level measuring device (1) according to any one of the preceding claims,
**characterized in that**
the additional sensor (12) is disposed on the safety device (5) in an angled manner.

10. The radar level measuring device (1) according to any one of the preceding claims,
**characterized in that**
the additional sensor (12) is coupled with the adjusting device (9) and is preferably disposed on the adjusting device (9).

11. The radar level measuring device (1) according to claim 10,
**characterized in that**
the additional sensor (12) is integrated into the reflector (7) or has a sensor housing (11) configured as a reflector (7).

12. The radar level measuring device (1) according to claim 10,
**characterized in that**
the additional sensor (12) is configured to be pivotable.

## Revendications

1. Appareil de mesure de niveau à radar (1) comprenant un générateur de signaux destiné à générer des ondes électromagnétiques et une antenne (3) destinée à émettre les ondes électromagnétiques et à recevoir des ondes électromagnétiques réfléchies, un dispositif de sécurité (5) destiné à vérifier la fonctionnalité ou à améliorer la qualité de mesure de l'appareil de mesure de niveau à radar (1), dans lequel ledit dispositif de sécurité (5) comprend un réflecteur (7), dans lequel ledit dispositif de sécurité (15) présente au moins un capteur (12) supplémentaire destiné à détecter une grandeur à mesurer, **caractérisé par le fait que** le dispositif de sécurité (5) comprend un dispositif de réglage (9) et est conçu de manière appropriée pour régler le réflecteur (7) au moins entre une première position (I) dans laquelle le réflecteur réfléchit les ondes électromagnétiques et une deuxième position (II) dans laquelle le réflecteur réfléchit de manière réduite les ondes électromagnétiques.

2. Appareil de mesure de niveau à radar (1) comprenant un générateur de signaux destiné à générer des ondes électromagnétiques et une antenne (3) destinée à émettre les ondes électromagnétiques et à recevoir des ondes électromagnétiques réfléchies, un dispositif de sécurité (5) destiné à vérifier la fonctionnalité ou à améliorer la qualité de mesure de l'appareil de mesure de niveau à radar (1), dans lequel ledit dispositif de sécurité (5) comprend un réflecteur (7), dans lequel ledit dispositif de sécurité (15) présente au moins un capteur (12) supplémentaire destiné à détecter une grandeur à mesurer, **caractérisé par le fait que** le dispositif de sécurité (5) comprend un dispositif de réglage (9) et un dispositif de réduction et est conçu de manière appropriée pour régler le réflecteur (7) et/ou le dispositif de réduction au moins entre une première position (I) dans laquelle le réflecteur réfléchit les ondes électromagnétiques et une deuxième position (II) dans laquelle le réflecteur réfléchit de manière réduite les ondes électromagnétiques.

3. Appareil de mesure de niveau à radar (1) selon la revendication 1 ou 2, **caractérisé par le fait que** ledit au moins un capteur (12) supplémentaire est disposé sur le dispositif de sécurité (5) et/ou est intégré à celui-ci.

4. Appareil de mesure de niveau à radar (1) selon l'une quelconque des revendications 1 à 3, **caractérisé par le fait que** le capteur (12) supplémentaire est conçu en tant que capteur de niveau de remplissage et/ou de niveau limite.

5. Appareil de mesure de niveau à radar (1) selon la revendication 4, **caractérisé par le fait que** le capteur (12) supplémentaire est conçu en tant que capteur de niveau de remplissage et/ou de niveau limite travaillant de façon capacitive.

6. Appareil de mesure de niveau à radar (1) selon la revendication 5, **caractérisé par le fait que** le dispositif de sécurité (5) présente un tube de guidage (10) qui est conçu en tant qu'électrode du capteur capacitif.

7. Appareil de mesure de niveau à radar (1) selon la revendication 5, **caractérisé par le fait que** le réflecteur (7) est conçu en tant que capteur capacitif.

8. Appareil de mesure de niveau à radar (1) selon l'une quelconque des revendications 1 à 4, **caractérisé par le fait que** le capteur (12) supplémentaire est conçu en tant que capteur de vibration ou flotteur ou capteur capacitif actionné à haute fréquence, ou en tant que capteur à ultrasons ou capteur de température.

9. Appareil de mesure de niveau à radar (1) selon l'une quelconque des revendications précédentes, **caractérisé par le fait que** le capteur (12) supplémentaire est disposé de façon coudée sur le dispositif de sécurité (5).

10. Appareil de mesure de niveau à radar (1) selon l'une quelconque des revendications précédentes, **caractérisé par le fait que** le capteur (12) supplémentaire est couplé au dispositif de réglage (9) et, de préférence, est disposé sur le dispositif de réglage (9).

11. Appareil de mesure de niveau à radar (1) selon la revendication 10, **caractérisé par le fait que** le capteur (12) supplémentaire est intégré au réflecteur (7) ou présente un boîtier de capteur (11) qui est conçu en tant que réflecteur (7).

12. Appareil de mesure de niveau à radar (1) selon la revendication 10, **caractérisé par le fait que** le capteur (12) supplémentaire est conçu de manière à pouvoir pivoter.
